Europäisches Patentamt

European Patent Office

Office européen des brevets

(11) Publication number: **0 106 644**

A2

## (12) EUROPEAN PATENT APPLICATION

(21) Application number: 83306099.9

(22) Date of filing: 07.10.83

(51) Int. Cl.³: **G 06 F 15/06**

(30) Priority: 15.10.82 GB 8229599

(43) Date of publication of application:
25.04.84 Bulletin 84/17

(84) Designated Contracting States:
AT BE CH DE FR IT LI LU NL SE

(71) Applicant: MARCONI AVIONICS LIMITED
Airport Works
Rochester Kent(GB)

(72) Inventor: Tucker, Christopher John
8, Cadogan Terrace Pitsea
Basildon Essex(GB)

(74) Representative: Hoste, Colin Francis et al,
The General Electric Company p.l.c. Central Patent
Department (Chelmsford Office) Marconi Research
Centre West Hanningfield Road
Great Baddow Chelmsford CM2 8HN, Essex(GB)

(54) Improvements in or relating to data processing.

(57) Data presented in the form of a sequential stream of digital words is processed by utilising one bit at a time of the same bit significance from each of a set of digital words to access a location in a data store. The addressed location contains a required partial result and a partial address field. The latter is used in combination with bits of a different significance from the set of digital words to form a new address to access a different location of the store, which holds a required further partial result and another partial address field. The process is continued until all bits of the set have been dealt with and a complete result has been assembled. The invention allows complex operations to be performed very rapidly on a large amount of data. The nature of the operations performed can very easily be altered by loading new information into the data store.

FIG. 1.

## Improvements in or relating to data processing

This invention relates to data processing in which operations are performed on digital data consisting of a number of individual digital bits arranged into words. As large amounts of data of various kinds can be generated extremely rapidly, it is becoming more desirable to perform particular processes upon that data at very high speeds. It is currently rather impracticable to so programme a computer using conventional software techniques as to ensure that it can perform a large number of computations at a sufficiently high speed so as to keep pace with the rate at which new data is presented to it, if the data bit rate is particularly high. This difficulty can be severe if the bit rate approches that at which real time video signals representative of a two dimensional scene or display are generated. This invention seeks to provide an improved method and apparatus for data processing in which these difficulties are reduced but which is of a versatile nature so that it is not restricted to a particular predetermined function, as is the case with conventional hardwired systems.

According to this invention a method of processing data consisting of words each comprising a plurality of digital bits of different predetermined significances includes the steps of: utilising first bits of the same first significance from a given plurality (set) of the digital words as at least part of the first address field of a data store, the addressed location of which holds data relating to the result of performing an operation on said first bits and data relating to a first partial address field; utilising second bits of the same second significance of the digital words as a second partial address field in combination with said first partial address field to form a second address field of the data store, the addressed location of which holds data relating to the result of performing an operation on said first bits and said second bits; and making available said results.

In practice it is convenient for all address fields to be of the same size, i.e. to consist of the same number of digital bits, and thus said first bits are treated as a partial address field to which is added a further partial address of the requisite number of bits. This added partial address may have bits of a predetermined or nominal nature. In general, the digital words may each contain more than two bits of differing significance, and thus the sequence is continued until all bits have been processed, with each addressed store location holding not only the current result but also the next partial address field. This process continues iteratively until all of the digital bits of the digital words have been utilised. The last location of the store to be addressed by bits of a particular set of digital words will contain in addition to a required result, a partial address field, but this partial address field is not utilised. Instead, for the first step of the process on the next set, a partial address having a predetermined or nominal value is specifically provided, e.g. by resetting a suitable latch.

In principle, the process can be arranged to perform a large number of different kinds of operation very rapidly indeed, the nature of the particular operation being determined by the nature of the information held in the store at the addressed locations. Since each location contains not only the result of performing the operation on the particular bits currently presented to it, but also a partial address field for the next stage of the process, the process is adaptive in dependance on the nature of the preceeding results.

This permits complex operations to be performed very rapidly on a sequence of values presented in the form of digital words consisting of a plurality of digital bits, without the need for magnitudes of the values to be determined as a separate preliminary operation. Thus, the operations are performed by what can be termed "bit plane" processing. Conveniently each digital word is presented in a format in which the most significant bit is made available first, followed by bits of progressively decreasing significance.

The invention is further described by way of example with reference to the accompanying drawing in which,

Figure 1 illustrates the schematic layout of a data processor, and

Figures 2 and 3 are explanatory diagrams illustrating the sequential steps performed by the processor.

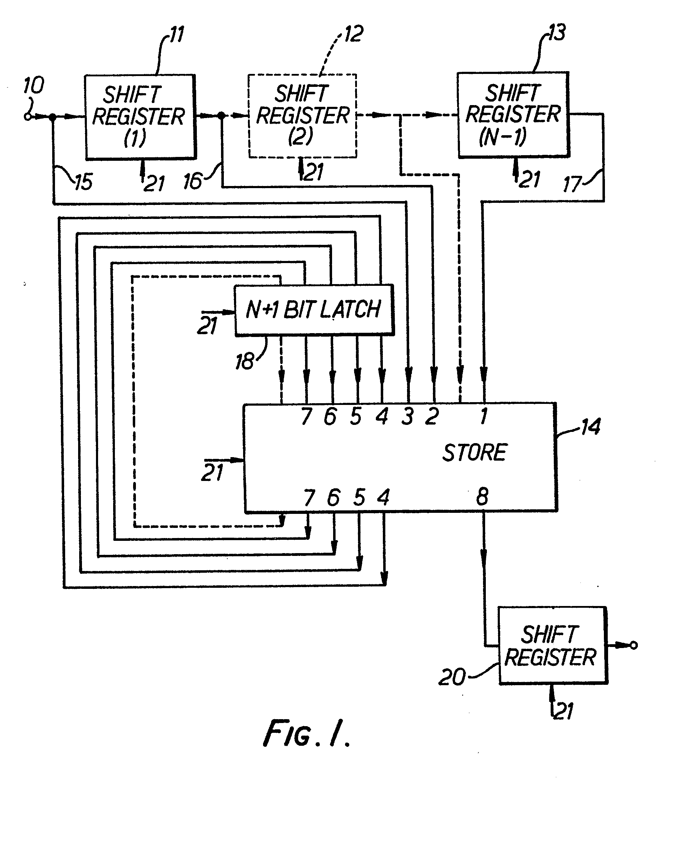

The invention is particulary suitable for processing data which is derived from a television camera or the like, in the form of a two dimensional raster pattern. Typically each television frame consists of several hundred raster lines, with each line containing several hundred separate picture points. Thus an extremely large number of picture points are generated during each television frame period, and the frame repetition rate is typically 25 Hz. In this example, each picture point is digitally coded into a four bit word and the sequence of digital words is organised into a serial stream of digits which are presented at a very high bit rate to the processor shown in figure 1. A real time video signal represents the upper bit rate at which the processor can operate using a data store currently having the shortest available access time, and in order to ease the practical difficulties of operating the processor at such a high speed, it is preferable to use a narrow bandwidth video signal, or to operate two or more
processors in parallel.

The processor shown in figure 1 is used to act
as a 3-point median filter, but as will be subsequently
explained the processor can be operated to provide
many different functions, the actual function provided
being determined by the nature of information which
is stored within it.  Thus, the structure and organisation of the processor will first be described
without reference to a specific function or operation.

The sequence of the digital words is applied to
terminal 10, each digital word consists of n bits
and is arranged such that the first digit represents
the most significant bit, and the last digit represents
the least significant bit.  The digital stream arriving
at terminal 10 is fed sequentially through N-1 shift
registers each having a capacity of n bits.  The number
N of the shift registers utilised will depend on the
nature of the process being performed.  In this example
it is assumed, for the sake of clarity of explanation,
that N = 3, and n = 4.  When two digital words have
been clocked into the shift registers 11 and 13 (register
12 being by-passed when N=3) it will be apparent that
their most significant bits are available at the outputs
of the respective shift registers, and the most signif-
cant bit of the next following digital word is present
at input terminal 10.  In general, when a sufficent
number of digital words has been received at terminal 10
such that all of the shift registers are full, the output
terminal of each shift register represent the most significant bit of successive digital words, and the most
significant bit of the next digital word is present at
terminal 10.  The input terminal 10 and each stage of
each shift register are connected to a data store 14
via individual leads 15,16, and 17.  These leads contain a partial address which is used to access a particular
location within the store 14, the remainder of the
address being provided by the contents of N+1 bit latch
18.

When the process first commences, the contents of
the latch 18 are set automatically to a predetermined
nominal value, by means to be described subsequently.
Thus, when address bits are present on leads 15,16
and 17 and at the four outputs of the latch 18, a seven
bit address field is available which accesses a unique
location in the store 14. In the present example, each
location of the store is assumed to hold a five bit
digital word, one bit of which is presented to an
output terminal 19 and the remaining four bits of which
are returned via N+1 feed back paths 20 to the latch 18.
The shift registers 11 and 13 are clocked (via clock lines
21) at the bit rate of the incoming data stream.
After one clock period, the next most significant bit
of the three digital words being processed is present
on leads 15,16 and 17. These bits, together with the
contents of the latch 18, represent the next seven bit
address field. The process continues iteratively with
each group of three input bits acting in combination
with the current contents of the latch 18 to address
a new location of the store 14, at which location is
present one output bit, and four bits which are routed
to the latch 18.

Although each incoming four bit digital word
represents a single signal value, it is not processed
directly using its real value. Instead a sequence of
four operations is performed utilising its four bits
in turn. As bits of the same significance are utilised
together from each of the set of digital words, each
value is handled as a sequence of bit planes.

The processing technique is described in more detail with reference to median filtering as applied
to digital signals.  As is known, median filtering is
a processing technique that can be applied to data
in order to remove isolated spikes that are present
due to noise.  A fixed odd number of contiguous data
samples are examined and ranked according to their
amplitude.  The value that is given the middle rank
is called the median, and is the output of the filter.
In this example, the fixed odd number is samples which
are examined is three and thus the median filter is
termed a three point filter.

Consider a sequence of five digital words having
the values 4,6,9,5, and 12.  A three point median
filter applied to the point (digital word) whose
amplitude is 6 would produce the following ranking:
greatest is 9; ,median is 6; and smallest is 4.  Thus
the value 6 would be the output of the median filter.
In principle a median filter can be applied to a larger
number of points, e.g. five or seven, or to an array
of two dimensional data by organising the shift register
to access two, three or more raster lines.  A structure
for accessing a two dimensional data array is described
in our copending patent application 8219081.

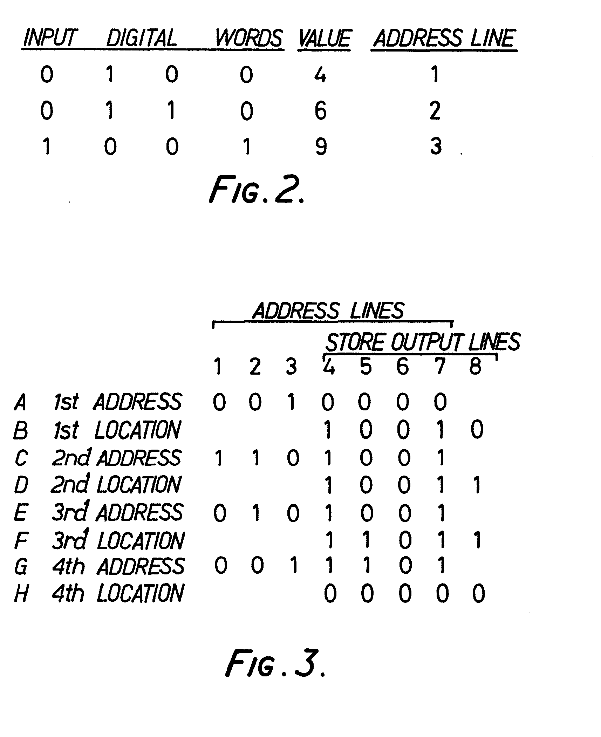

The example of median filtering is used to explain
the operation of the digital processor, when it is
configured to act as a three point median filter.
Referring to figure 2, the sequential digital values
4,6, and 9 are shown in their digital representation,
and it is in this form that the values are presented in
turn to terminal 10.

Each location within the data store 14 is accessed
via seven address lines identified as 1 - 7. Initially
the latch 8 is set such that the address lines 4,5,6
and 7 each have a nominal preset digital value of 0.
Thus the first full address field consists of the partial address field on address lines 1,2,3, and the partial address field on address lines 4,5,6, and 7. The complete first address field is shown in line A of figure 3. The contents of the location addressed is represented at line B, and it consists of five digital bits. Because four of the bits stored at this location are used subsequently as address lines, the five stored bits are designated output lines 4,5,6,7 and 8. Considering again the three address lines 1,2, and 3 (which represent the three most significant bits of the three digital words to be filtered) it is clear that the digital bit on line 3 cannot represent the digital word having the median value since it has digital value 1 whereas the bits on address lines 1 and 2 both have digital value 0. Thus the entry on address line 3 is to be excluded; the bit made available on output line7 has a value of digital 1 to indicate this exclusion - the digital 0's on lines 5 and 6 indicate that the bits on address lines 1 and 2 are possibles. It is thus apparent that it is the larger of the two bits on lines 1 and 2 which represents the median value of the three words currently under consideration. Output line 4 has a value 1 to indicate that is the greater of the values of the words relating to address lines 1 and 2 which is required. The first bit of the median must have zero digital value and hence it is this value 0 which is provided on output line 8, and passed to the shift register 20.

The second address field (shown in line C of figure 3) consists of the next most significant bits of the three digital values 4,6, and 9, in combination with the partial field represented by the previous store output lines 4,5,6, and 7. This address field accesses the location at which is stored the values shown in line D of figure 3. The value on output line 7 confirms that it is still the bit on address line 3 which is to
be excluded as it cannot represent the median value.
The bit on address line 4 still indicates that it is
the greater of the two values on address lines 1 and 2
which represent the median, but since the values on
address lines 1 and 2 are both digital 1's no distinction
can at present be made between them. However, it is clear
that the next bit of the median value must itself be a
digital 1, and it is this value which is provided on
output line 8 and clocked into shift register 20. The
third most significant bits of the input digital words
4,6, and 9 on address lines 1,2, and 3, in combination
with the partial address field currently stored in latch
18 and which corresponds to the previous store output
lines 4,5,6, and 7, are used to address the next location
of the store. At the addressed location, store output
line 5 now has a digital 1 since the value on address
line 1 can now also be excluded as not being the median
value. The value on store output line 7 remains unchanged at a digital 1 to indicate that input line 3
is still excluded, and similarly the value on store
output line 4 remains at digital 1 to confirm that
it is still the greater of the values on address
lines 1 and 2 which represents the median value. The
current median bit value is digital 1 (the value on
address line 2) and is made available on store output
line 8. The fourth address field (shown at line G of
figure 3) consists of the least significant bits of the
digital words on address lines 1,2, and 3, in combination
with the previous values on store output line 4,5,6,
and 7. As it is now known that the median value is that
represented by address line 2, the value 0 is made
available on store output line 8. It will be seen that
the digital values which have been made sequentially
available on store output line 8 are 0110. This is the digital representation of the median value 6, and is held within the shift register 20 for utilisation as required.

It will be recalled that the original sequence of digital words had the values 4,6,9,5, and 12. When the above process is completed, the first value 4 of the set 4,6,9 is discarded, and the next median filtering operation is performed on the following three points 6,9,5 which represent the next set of digital words to be processed. The process is thus repeated for these three points, and in due course the digital representation of the median value (which is 6) is assembled in the shift register 20. Each time the process commences on a new set of digital words, the contents of the latch 18 are externally reset to hold all digital 0 values.

Different processing functions can be readily provided, merely by entering new data in the store 14. In the case of a three point median filter for 4-bit digital words, the capacity of the store 14 is only 128 bytes, each of 5 bits.

## Claims

1. A method of processing data consisting of words each comprising a plurality of digital bits of different predetermined significances including the steps of: utilising first bits of the same first significance from a given plurality of the digital words as at least part of the first address field of a data store, the addressed location of which holds data relating to the result of performing an operation on said first bits and data relating to a first partial address field; utilising second bits of the same second significance of the digital words as a second partial address field in combination with said first partial address field to form a second address field of the data store, the addressed location of which holds data relating to the result of performing an operation on said first bits and said second bits; and making available said results.

2. A method as claimed in claim 1, and where in a number of bits of predetermined values are combined with' said first bits so that said first address field consists of the same number bits as the second address field.

3. A method as claimed in claim 1 or 2 and wherein successive address field are each formed by combining a partial address consisting of successive bits of the same mutual significance of said digital words with a partial address obtained from the previously addressed location of said data store; and utilising each successive address field to address the corresponding locations of the data store until all bits of the said given plurality of digital words have been processed.

4. A method as claimed in any of the preceding claims and wherein the digital bits relating to each given plurality of digital words are processed in order of decreasing significance, commencing with the most

11

0106644

significant bit.

5. A method as claimed in claim 4, and wherein each given plurality of digital words occur in a sequential data stream which is fed through a number of shift register stages, selected stages of which act as access points at which the digital bits are made available to constitute partial addresses.

6. A method as claimed in claim 5, and wherein the partial address fields which are obtained from addressed locations of the data store are temporarily held in a latch before being utilised to address subsequent locations, the operation of the latch being synchronised to that of the shift register stages.

7. A method as claimed in any of the preceding claims and wherein, when said given plurality of digital words have been processed, the first digital word of said plurality in the data stream is discarded, and the digital word following said given plurality forms, in combination with the remaining words of said given plurality, a new set of digital words, which are then processed in the same manner as the previous given plurality of digital words.

8. A method as claimed in any of the preceding claims and wherein said results represent the median value of the given plurality of digital words, a respective digital bit of the median value being made available at an output of said data store on each occasion that a location of it is addressed, until an output digital word having the requisite number of bits has been assembled.

1/2

0106644

FIG. 1.

0106644

| INPUT | DIGITAL | WORDS | VALUE | | ADDRESS LINE |
|---|---|---|---|---|---|
| 0 | 1 | 0 | 0 | 4 | 1 |
| 0 | 1 | 1 | 0 | 6 | 2 |
| 1 | 0 | 0 | 1 | 9 | 3 |

FIG. 2.

| | | ADDRESS LINES | | | STORE OUTPUT LINES | | | | |
|---|---|---|---|---|---|---|---|---|---|
| | | 1 | 2 | 3 | 4 | 5 | 6 | 7 | 8 |
| A | 1st ADDRESS | 0 | 0 | 1 | 0 | 0 | 0 | 0 | |
| B | 1st LOCATION | | | | 1 | 0 | 0 | 1 | 0 |
| C | 2nd ADDRESS | 1 | 1 | 0 | 1 | 0 | 0 | 1 | |
| D | 2nd LOCATION | | | | 1 | 0 | 0 | 1 | 1 |
| E | 3rd ADDRESS | 0 | 1 | 0 | 1 | 0 | 0 | 1 | |
| F | 3rd LOCATION | | | | 1 | 1 | 0 | 1 | 1 |
| G | 4th ADDRESS | 0 | 0 | 1 | 1 | 1 | 0 | 1 | |
| H | 4th LOCATION | | | | 0 | 0 | 0 | 0 | 0 |

FIG. 3.